# EUROPEAN PATENT SPECIFICATION

(11) **EP 4 142 006 B1**
(45) Date of publication and mention of the grant of the patent: **18.03.2026**
(21) Application number: 22190779.3
(22) Date of filing: 17.08.2022
(51) Int. Cl.: H01M 10/0567, H01M 10/0525, H01M 10/42, H01M 4/36, H01M 4/38, H01M 4/525, H01M 4/587

(54) **RECHARGEABLE LITHIUM BATTERY**
WIEDERAUFLADBARE LITHIUMBATTERIE
BATTERIE RECHARGEABLE AU LITHIUM

(30) Priority: 26.08.2021 KR 20210113347
(43) Date of publication of application: 01.03.2023
(73) Proprietor: Samsung SDI Co., Ltd., Yongin-si, Gyeonggi-do 17084 (KR)
(72) Inventor: Park, Hongryeol, 17084 Yongin-si, Gyeonggi-do (KR); Kim, Myung-Hoon, 17084 Yongin-si, Gyeonggi-do (KR); Kim, Sanghoon, 17084 Yongin-si, Gyeonggi-do (KR); Kim, Yunhee, 17084 Yongin-si, Gyeonggi-do (KR); Park, Injun, 17084 Yongin-si, Gyeonggi-do (KR); Shin, Jeongmin, 17084 Yongin-si, Gyeonggi-do (KR); Oh, Seungryong, 17084 Yongin-si, Gyeonggi-do (KR); Jeong, Myunghwan, 17084 Yongin-si, Gyeonggi-do (KR); Choi, Hyunbong, 17084 Yongin-si, Gyeonggi-do (KR)
(74) Representative: Gulde & Partner

(56) References cited:
- EP-A1- 2 746 288
- CN-A- 108 365 265
- CN-A- 108 428 942
- KR-A- 20190 123 136
- US-A1- 2020 185 773

## Description

### BACKGROUND OF THE INVENTION

### (a) Field of the Invention

A rechargeable lithium battery having improved high-temperature storage characteristics is disclosed.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

In particular, as IT devices increasingly achieve high performance, a high-capacity battery is required, but the high capacity may be realized through expansion of a voltage range, increasing energy density but bringing about a problem of deteriorating performance of a positive electrode due to oxidization of an electrolyte in the high voltage range.

For example, LiPF₆, which is most often used as a lithium salt of the electrolyte, has a problem of reacting with a solvent of the electrolyte and thus promoting depletion of the solvent and generating a large amount of gas. LiPF₆ is decomposed and produces a decomposition product such as HF, PFs, and the like, which causes the electrolyte depletion and leads to performance deterioration and insufficient safety at a high temperature.

For example, US 2020/185773 A1 discloses an electrolyte for a secondary battery which includes a lithium salt, a nonaqueous organic solvent and a cyclic fluorophosphonate compound. KR 2019 0123136 A discloses a rechargeable lithium battery comprising a positive electrode including a positive active material; a negative electrode including a negative active material and an electrolyte solution including a non-aqueous organic solvent, a lithium salt and a cyclic halogenophosphite compound as an additive. CN 108 428 942 A relates to a lithium-ion battery including non-aqueous organic solvents, lithium salts and additives which are six-membered cyclic phosphite compounds and CN 108 365 265 A describes non-aqueous electrolyte compositions for a lithium-ion battery wherein the non-aqueous electrolyte comprises a non-aqueous organic solvent, conductive lithium salt and a cyclic phosphate or cyclic phosphite additive. EP 2 746 288 A1 discloses a rechargeable lithium battery, comprising a positive electrode including a positive active material, a negative electrode including a negative active material, and an electrolyte comprising: a lithium salt, a non-aqueous organic solvent and an electrolyte additive.

The decomposition products of the electrolyte are deposited into a film on the surface of an electrode to increase internal resistance of the battery and eventually cause problems of deteriorating battery performance and shortening a cycle-life. In particular, this side reaction is further accelerated at a high temperature where a reaction rate becomes faster, and gas components generated due to the side reaction may rapidly increase an internal pressure of the battery and thus have a fatal adverse effect on stability of the battery. The electrolyte oxidization in the high voltage range is very accelerated and thus known to greatly increase resistance of the electrode during the long-term charge and discharge process. Accordingly, an electrolyte applicable under conditions of a high voltage and a high temperature condition is being required.

### SUMMARY OF THE INVENTION

The present invention provides a rechargeable lithium battery with improved battery stability by suppressing decomposition of an electrolyte and a side reaction with an electrode and simultaneously, with improved initial resistance and high-temperature storage characteristics by improving impregnation of a positive electrode in the electrolyte.

According to the present invention the rechargeable lithium battery includes a positive electrode including a positive active material; a negative electrode including a negative active material; and an electrolyte including a non-aqueous organic solvent, a lithium salt, and an additive represented by Chemical Formula 1, wherein a volume thereof is about 5 cm³ to about 200 cm³.

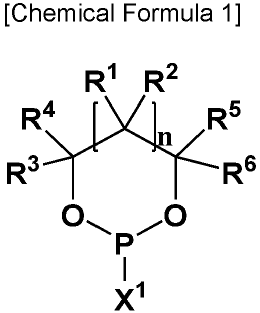

In Chemical Formula 1, X¹ is a fluoro group, a chloro group, a bromo group, or an iodo group, R¹ to R⁶ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and n is an integer of 0 or 1, wherein in the term "substituted or unsubstituted", "substituted" means that a hydrogen atom in a compound is replaced by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, C1 to C30 alkoxy group, C1 to C20 heteroalkyl group, C2 to C20 heteroaryl group, a C3 to C20 heteroarylalkyl group, a C3 to C30 cycloalkyl group, a C3 to C15 cycloalkenyl group, a C6 to C15 cycloalkynyl group, a C2 to C30 heterocycloalkyl group, and a combination thereof and
the positive electrode includes a current collector and a positive active material layer on the current collector,
the positive active material layer includes the positive active material and a carbon nanotube, and
the carbon nanotube is included in an amount of 0.5 wt% to 2.0 wt% based on the total weight of the positive active material layer.

The rechargeable lithium battery according to the invention suppresses a decomposition of electrolyte and side reaction with the electrode, thereby reducing gas generation and suppressing increase in internal resistance of the battery at the same time, and improving battery stability and high-temperature storage characteristics.

### BRIEF DESCRIPTION OF THE DRAWINGS

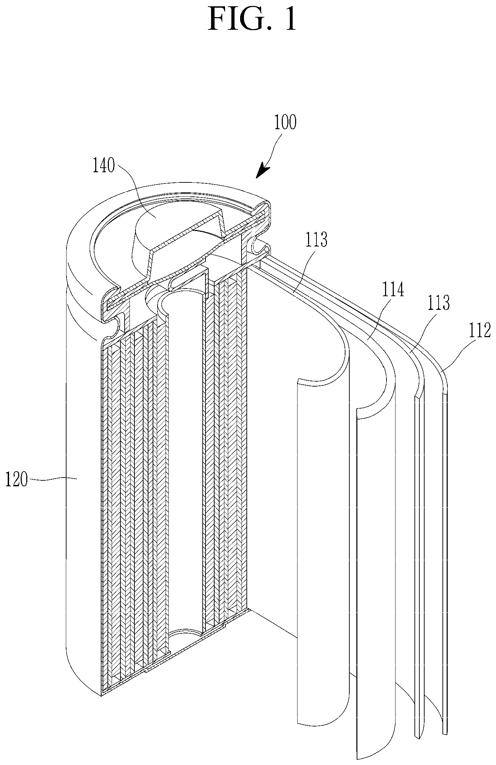

FIG. 1 is a schematic view illustrating a rechargeable lithium battery according to an embodiment.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "a combination thereof" refers to a mixture, a laminate, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

As used herein, in the term "substituted or unsubstituted", "substituted" means that a hydrogen atom in a compound is replaced by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, C1 to C30 alkoxy group, C1 to C20 heteroalkyl group, C2 to C20 heteroaryl group, a C3 to C20 heteroarylalkyl group, a C3 to C30 cycloalkyl group, a C3 to C15 cycloalkenyl group, a C6 to C15 cycloalkynyl group, a C2 to C30 heterocycloalkyl group, and a combination thereof. It may mean that the hydrogen atom in the compound may be replaced by a substituent selected from a halogen atom (F, Br, Cl, or I), a hydroxy group, an alkoxy group, a nitro group, a cyano group, an amino group, a C1 to C20 alkyl group, a C6 to C30 aryl group, a C1 to C30 alkoxy group, a C3 to C30 cycloalkyl group, and a combination thereof.

Here, "or" is not to be construed as an exclusive meaning, and for example, "A or B" is construed to include A, B, A+B, and the like.

### Rechargeable Lithium Battery

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

A rechargeable lithium battery may be classified as lithium ion batteries, lithium ion polymer batteries, and lithium polymer batteries according to the presence of a separator and the type of electrolyte used therein. The rechargeable lithium battery may have a variety of shapes and sizes, and include cylindrical, prismatic, coin, or pouch-type batteries, and may be thin film batteries or may be rather bulky in size. The rechargeable lithium battery according to an embodiment may be a coin-shaped or circular rechargeable lithium battery, but is not limited thereto.

The rechargeable lithium battery according to an embodiment has a volume of about 5 cm³ to about 200 cm³, which may be expressed as a cell volume. The volume of the rechargeable lithium battery may refer to the internal volume of the battery case. That is, the volume of each battery is standardized, and in the present invention, the volume of the battery may mean the volume of the battery case itself standardized for each battery. In an embodiment, high-temperature storage characteristics may be remarkably improved by including the additive represented by Chemical Formula 1 in the electrolyte and at the same time adjusting the cell volume to a certain range. The cell volume may be, for example about 10 cm³ to about 180 cm³, or about 15 cm³ to about 150 cm³.

### Electrolyte

The electrolyte for a rechargeable lithium battery according to an embodiment includes a non-aqueous organic solvent, a lithium salt, and an additive represented by Chemical Formula 1.

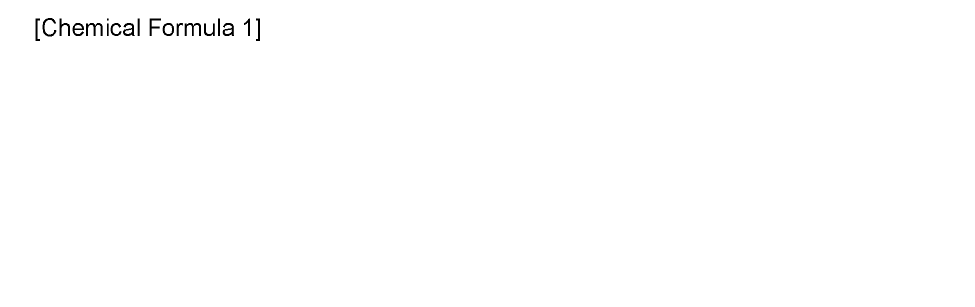

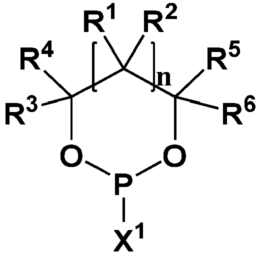

In Chemical Formula 1, X¹ is a fluoro group, a chloro group, a bromo group, or an iodo group, R¹ to R⁶ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and n is an integer of 0 or 1.

The additive represented by Chemical Formula 1 forms a solid electrolyte interface (SEI) film having high high-temperature stability and excellent ion conductivity on the surface of the negative electrode, and suppresses a side reaction of LiPF₆ due to the -PO₂X¹ (especially -PO₂F) functional group and thus reduce gas generation due to a decomposition reaction of the electrolyte when stored at a high temperature.

Specifically, the additive represented by Chemical Formula 1 may be coordinated with a pyrolyzed product of a lithium salt such as LiPF₆ or anions dissociated from the lithium salt and thus form a complex, and the complex formation may stabilize the pyrolyzed product of a lithium salt such as LiPF₆ or the anions dissociated from the lithium salt to suppress undesired side reaction of the anions with the electrolyte. Accordingly, the cycle-life characteristics of the rechargeable lithium battery may be improved, and gas may be prevented from being generated inside the rechargeable lithium battery, thereby remarkably reducing a failure rate and improving high-temperature storage characteristics.

Chemical Formula 1 may be for example represented by Chemical Formula 1A or Chemical Formula 1B.

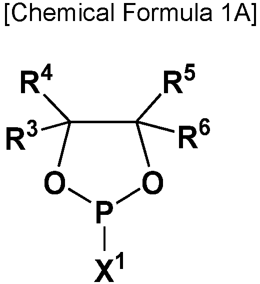

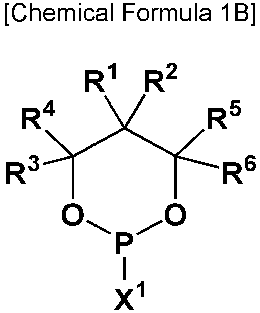

In Chemical Formula 1A and Chemical Formula 1B, X¹ is a fluoro group, a chloro group, a bromo group, or an iodo group, and R¹ to R⁶ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, in Chemical Formula 1A and Chemical Formula 1B, R¹, R²,

R³, and R⁴ may each be hydrogen, and at least one of R⁵ and R⁶ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, Chemical Formula 1 may be represented by Chemical Formula 1A. In Chemical Formula 1A, R³ and R⁴ may each be hydrogen, and at least one of R⁵ and R⁶ may be a substituted or unsubstituted C1 to C10 alkyl group. Alternatively, R³, R⁴, R⁵, and R⁶ of Chemical Formula 1A may each be hydrogen.

For example, the additive represented by Chemical Formula 1 may be one of the compounds of Group 1, i.e. at least one of 2-fluoro-1,3,2-dioxaphospholane and 2-fluoro-4-methyl-1,3,2-dioxaphospholane.

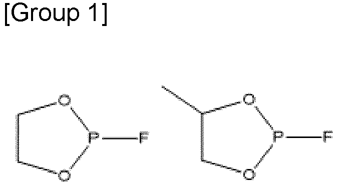

The additive represented by Chemical Formula 1 may be included in an amount of about 0.1 parts by weight to about 10.0 parts by weight, for example about 0.1 parts by weight to about 9.0 parts by weight, about 0.1 parts by weight to about 7.0 parts by weight, about 0.1 parts by weight to about 5.0 parts by weight, about 0.1 parts by weight to about 3.0 parts by weight, or about 0.2 parts by weight to about 3.0 parts by weight based on 100 parts by weight of the total electrolyte (non-aqueous organic solvent + lithium salt) excluding the additive, and

In this case, the rechargeable lithium battery including the electrolyte may exhibit excellent high-temperature storage characteristics and cycle-life characteristics.

The non-aqueous organic solvent serves as a medium for transmitting ions taking part in the electrochemical reaction of a battery. The non-aqueous organic solvent may be a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like and the ketone-based solvent may include cyclohexanone, and the like. The alcohol-based solvent may include ethanol, isopropyl alcohol, and the like and the aprotic solvent may include nitriles such as R-CN (wherein R is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture, When the organic solvent is used in a mixture, the mixture ratio may be controlled in accordance with a desirable battery performance.

The carbonate-based solvent is prepared by mixing a cyclic carbonate and a linear carbonate. When the cyclic carbonate and linear carbonate are mixed together in a volume ratio of about 1:1 to about 1:9, an electrolyte performance may be improved.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula I.

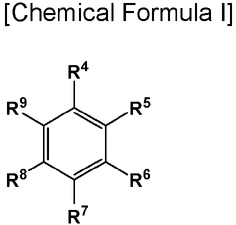

In Chemical Formula I, R⁴ to R⁹ are the same or different and are hydrogen, a halogen, a C1 to C10 alkyl group, a C1 to C10 haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylene carbonate or an ethylene carbonate-based compound represented by Chemical Formula II in order to improve cycle-life of a battery.

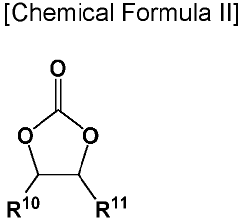

In Chemical Formula II, R¹⁰ and R¹¹ are the same or different, and hydrogen, a halogen, a cyano group, a nitro group, or a fluorinated C1 to C5 alkyl group, provided that at least one of R¹⁰ and R¹¹ is a halogen, a cyano group, a nitro group, or a fluorinated C1 to C5 alkyl group, and R¹⁰ and R¹¹ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The electrolyte may further include other additives in addition to those described above. The other additives may include, for example vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium tetrafluoroborate (LiBF₄), lithium difluorophosphate (LiPO₂F₂), 2-fluoro biphenyl (2-FBP), or a combination thereof. When the electrolyte further includes such other additives, high-temperature storage characteristics may be improved, and for example gases generated from the positive electrode and the negative electrode during high-temperature storage may be effectively controlled.

The other additives may be included in an amount of about 0.2 parts by weight to about 20 parts by weight, specifically about 0.2 parts by weight to about 15 parts by weight, for example about 0.2 parts by weight to about 10 parts by weight based on 100 parts by weight of the total electrolyte (non-aqueous organic solvent + lithium salt) excluding the additive represented by Chemical Formula 1 and other additives. In this case, an increase in the film resistance may be minimized to contribute to improvement of the battery performance.

The lithium salt dissolved in the non-organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂,

Li(FSO₂)₂N (lithium bis(fluorosulfonyl)imide, LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein, x and y are natural numbers, for example, an integer ranging from 1 to 20, lithium difluoro(bisoxalato) phosphate, LiCl, Lil, LiB(C₂O₄)₂ (lithium bis(oxalato)borate; LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

### Positive Electrode

A positive electrode for a rechargeable lithium battery includes a current collector and a positive active material layer disposed on the current collector. The positive active material layer includes a positive active material, and may further include a binder and/or a conductive material.

The positive active material may include lithiated intercalation compounds that reversibly intercalate and deintercalate lithium ions. Examples of the positive active material may be a compound represented by one of chemical formulas:
LiₐA_{1-b}X_{b}D₂ (0.90 ≤ a ≤ 1.8, 0 ≤ b ≤ 0.5);
LiₐA_{1-b}X_{b}O_{2-c}D_{c} (0.90 ≤ a ≤ 1.8, 0 ≤ b ≤ 0.5, 0 ≤ c ≤ 0.05);
LiₐE_{1-b}X_{b}O_{2-c}D_{c} (0.90 ≤ a ≤ 1.8, 0 ≤ b ≤ 0.5, 0 ≤ c ≤ 0.05);
LiₐE_{2-b}X_{b}O_{4-c}D_{c} (0.90 ≤ a ≤ 1.8, 0 ≤ b ≤ 0.5, 0 ≤ c ≤ 0.05);
LiₐNi_{1-b-c}Co_{b}X_{c}D_{α} (0.90 ≤ a ≤1.8, 0 ≤ b ≤ 0.5, 0 ≤ c ≤ 0.5, 0 < α ≤ 2);
LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2);
LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2);
LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);
LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);
LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);
LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);
LiₐNi_{b}Co_{c}Mn_{d}GeO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);
LiₐNiG_{b}O₂ (0.90 ≤ a ≤ 1.8, 0.001 ≤ b ≤ 0.1);
LiₐCoG_{b}O₂ (0.90 ≤ a ≤ 1.8, 0.001 ≤ b ≤ 0.1);
LiₐMn_{1-b}G_{b}O₂ (0.90 ≤ a ≤ 1.8, 0.001 ≤ b ≤ 0.1);
LiₐMn₂G_{b}O₄ (0.90 ≤ a ≤ 1.8, 0.001 ≤ b ≤ 0.1);
LiₐMn_{1-g}G_{g}PO₄ (0.90 ≤ a ≤ 1.8, 0 ≤ g ≤ 0.5);
QO₂; QS₂; LiQS₂;
V₂O₅; LiV₂O₅;
LiZO₂;
LiNiVO₄;
Li_{(3-f)}J₂(PO₄)₃ (0 ≤ f ≤ 2);
Li_{(3-f)}Fe₂(PO₄)₃ (0 ≤ f ≤ 2);
LiₐFePO₄ (0.90 ≤ a ≤ 1.8).

In chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a combination thereof. The coating layer forming process may be any method that does not adversely affect physical properties of the positive active material, for example, spray coating, dipping, and the like.

In an embodiment, a nickel-based positive active material may be applied as the positive active material. For example, the positive active material may be a high nickel-based positive active material in which a nickel content is greater than or equal to about 80 mol% based on the total amount of all elements excluding lithium and oxygen. In the high nickel-based positive active material, the nickel content may be greater than or equal to about 81 mol%, greater than or equal to about 86 mol%, greater than or equal to about 90 mol%, greater than or equal to about 91 mol%, or greater than or equal to about 93 mol% and less than or equal to about 99 mol% or less than or equal to about 98 mol% based on the total amount of elements excluding lithium and oxygen. When the high nickel-based positive active material is used, very high capacity may be realized. By the way, the high nickel-based positive active material, in which a large amount of cations are mixed, has a problem of rather deteriorating capacity or structurally destroying an active material and generating a side reaction with an electrolyte. However, in one embodiment, the high nickel-based positive active material may be applied without the problems by adjusting a volume of a battery, while the additive represented by Chemical Formula 1 is added to the electrolyte, and in addition, improve battery performance at a high temperature.

For example, the positive active material may include at least one type of lithium composite oxide represented by Chemical Formula 2.

[Chemical Formula 2] LiₐNiₓCo_{y}M¹_{z}M²tO₂

In Chemical Formula 2, 0.9≤a<1.2, 0.8≤x<1.0, 0<y≤0.2, 0<z≤0.2, 0≤t≤0.1, x+y+z+t=1, M¹ is Mn, Al, or a combination thereof, and M² is B, Ba, Ca, Ce, Cr, Cu, F, Fe, Mg, Mo, Nb, P, S, Si, Sr, Ti, V, W, Zr, or a combination thereof.

In Chemical Formula 2, x may be, for example, 0.85≤x<1.0, 0.88≤x<1.0, 0.90≤x<1.0, 0.91≤x<1.0, 0.92≤x<1.0 or 0.93≤x<1.0.

Chemical Formula 2 may be, for example, represented by Chemical Formula 2-1 or Chemical Formula 2-2.

[Chemical Formula 2-1] Liₐ₁Niₓ₁Co_{y1}Al_{z1}M³_{(1-x1-y1-z1)}O₂

In Chemical Formula 2-1, 0.9≤a1≤1.2, 0.80≤x1<1.0, 0<y1≤0.20, 0<z1≤0.20, and M³ is B, Ba, Ca, Ce, Cr, Cu, F, Fe, Mg, Mo, Nb, P, S, Si, Sr, Ti, V, W, Zr, or a combination thereof.

[Chemical Formula 2-2] Liₐ₂Niₓ₂Co_{y2}Mn_{z2}M⁴_{(1-x2-y2-z2)}O₂

In Chemical Formula 2-2, 0.9≤a2≤1.2, 0.80≤x2<1.0, 0<y2≤0.20, 0<z2≤0.20, and M⁴ is B, Ba, Ca, Ce, Cr, Cu, F, Fe, Mg, Mo, Nb, P, S, Si, Sr, Ti, V, W, Zr, or a combination thereof.

The positive active material may be included in an amount of about 90 wt% to about 98 wt% based on the total weight of the positive active material layer.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The binder in the positive active material layer may be included in an amount of about 1 wt% to about 5 wt% based on the total weight of the positive active material layer.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanotube, and the like; a metal-based material having a shape of a metal powder or a metal fiber including copper, nickel, aluminum, silver, or the like; a conductive polymer such as a polyphenylene derivative; or a mixture thereof.

The conductive material in the positive active material layer may be included in an amount of about 1 wt% to about 5 wt% based on the total weight of the positive active material layer.

According to the present invention, the positive active material layer includes a carbon nanotube. Herein, dispersibility of the positive active material slurry is improved, processability such as coating and the like is also improved during formation of the positive active material layer, and conductivity of the positive active material layer is improved. In addition, the effect of improving high-temperature storage characteristics according to the additive represented by Chemical Formula 1 in the electrolyte can be maximized. According to the present invention the carbon nanotube is included in an amount of about 0.5 wt% to about 2.0 wt% based on the total weight of the positive active material layer. Herein, the effect by the carbon nanotube is increased to the maximum.

The positive electrode current collector may include an aluminum foil, but is not limited thereto.

### Negative Electrode

A negative electrode for a rechargeable lithium battery includes a current collector and a negative active material layer positioned on the current collector. The negative active material layer may include a negative active material, and may further include a binder and/or a conductive material.

The negative active material may include a material that reversibly intercalates/deintercalates lithium ions, a lithium metal, a lithium metal alloy, a material being capable of doping/dedoping lithium, or transition metal oxide.

The material that reversibly intercalates/deintercalates lithium ions may include a carbon-based negative active material, for example crystalline carbon, amorphous carbon, or a combination thereof. The crystalline carbon may be non-shaped, or plate, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material being capable of doping/dedoping lithium may be a Si-based negative active material or a Sn-based negative active material. The Si-based negative active material may be silicon, a silicon-carbon composite, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), and the Sn-based negative active material may be Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn) and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may include a coal-based pitch, mesophase pitch, a petroleum-based pitch, coal-based oil, petroleum-based heavy oil, or a polymer resin such as a phenolic resin, a furan resin, or a polyimide resin. In this case, a content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be desirably about 10 nm to about 200 nm. The silicon particles may be present in an oxidized form, and an atomic content ratio of Si:O in the silicon particles indicating a degree of oxidation may be about 99:1 to about 33:67. The silicon particles may be SiOₓ particles, and the range of x in SiOₓ may be greater than about 0 and less than about 2. In the present specification, As used herein, when a definition is not otherwise provided, an average particle diameter (D50) indicates the diameter of a particle where an accumulated volume is about 50 volume% in a particle distribution.

The Si-based negative active material or Sn-based negative active material may be mixed with the carbon-based negative active material. When the Si-based negative active material or Sn-based negative active material and carbon-based negative active material are mixed, a mixing ratio thereof may be about 1:99 to about 90:10 by weight ratio.

In an embodiment, the negative active material may include a material including about 70 wt% to about 99 wt% of the carbon-based active material and about 1 wt% to about 30 wt% of silicon-based active material. Herein, basic battery performance such as cycle-life characteristics and the like may be maintained, while capacity is maximized, and high-temperature storage characteristics may also be improved. Herein, the carbon-based active material may be crystalline carbon such as natural graphite, artificial graphite, or the like, and the silicon-based active material may be silicon nanoparticles, a silicon-carbon composite, or a combination thereof. In addition, the negative active material may include, for example, about 90 wt% to about 99 wt% of the carbon-based active material and about 1 wt% to about 10 wt% of the silicon-based active material.

In the negative active material layer, the negative active material may be included in an amount of about 95 wt% to about 99 wt% based on the total weight of the negative active material layer.

In an embodiment, the negative active material layer may further include a binder, and may optionally further include a conductive material. A content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, an ethylene oxide-containing polymer, ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluorine rubber, and a combination thereof. The polymer resin binder may be selected from polyethylene oxide, polyvinylpyrrolidone, polyepichlorohydrine, polyphosphazene, polyacrylonitrile, an ethylene propylene diene copolymer, polyvinylpyridine, chlorosulfonated polyethylene, a latex, a polyesterresin, an acrylic resin, a phenolic resin, an epoxy resin, polyvinyl alcohol, and a combination thereof.

When the water-soluble binder is used as a negative electrode binder, a thickener such as a cellulose-based compound may be further used to provide viscosity. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanotube, and the like; a metal-based material having a shape of a metal powder or a metal fiber including copper, nickel, aluminum silver, or the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

### Separator

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. The separator 113 may include, for example, a glass fiber, polyester, TEFLON (tetrafluoroethylene), polyethylene, polypropylene, polytetrafluoroethylene, or a combination thereof and may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multi-layered structure.

The rechargeable lithium battery according to an embodiment has high capacity and has excellent storage stability, cycle-life characteristics, and high rate capability at high temperatures, and thus can be used in IT mobile devices, electric vehicles, hybrid vehicles, and the like.

Hereinafter, examples of the present invention and comparative examples are described. It is to be understood, however, that the examples are for the purpose of illustration and are not to be construed as limiting the present disclosure.

### Example 1-1

### Manufacture of Positive Electrode

95 wt% of a LiNi_{0.94}Co_{0.04}Al_{0.02}O₂ positive active material, 3 wt% of a polyvinylidene fluoride binder, and 2 wt% of a carbon nanotube conductive material (average length: 50 µm) were mixed in an N-methyl pyrrolidone solvent, preparing positive active material slurry. The positive active material slurry was coated on an aluminum current collector and then, dried and compressed, manufacturing a positive electrode.

### Manufacture of Negative Electrode

98 wt% of a negative active material prepared by mixing 93.5 wt% of graphite and 6.5 wt% of a silicon-carbon composite, 1 wt% of a styrene-butadiene rubber binder, and 1 wt% of carboxylmethyl cellulose were mixed in distilled water, preparing negative active material slurry. The negative active material slurry was coated on a copper current collector and then, dried and compressed, manufacturing a negative electrode.

### Manufacture of Rechargeable Lithium Battery Cell

A rechargeable lithium battery cell was manufactured by disposing a 25 µm-thick polyethylene separator between the positive electrode and the negative electrode to manufacture an electrode assembly and then, injecting an electrolyte thereinto. The electrolyte was a composition prepared by adding a 1.5 M LiPF₆ lithium salt, 2.0 parts by weight of a 2-fluoro-4-methyl-1,3,2-dioxaphosphorane additive, 10 parts by weight of fluoroethylenecarbonate (FEC), and 0.5 parts by weight of succinonitrile (SN) in a solvent obtained by mixing ethylene carbonate, ethylmethyl carbonate, and dimethyl carbonate in a volume ratio of 2:1:7. Herein, the parts by weight means a relative content of additives based on 100 parts by weight of the entire electrolyte solution (a non-aqueous organic solvent + a lithium salt) excluding all additives. The manufactured battery cell was a circular cell with a volume of 17 cm³.

### Examples 1-1 to 4-6 and Comparative Examples 1-1 to 1-6

Each positive electrode, negative electrode, and rechargeable lithium battery cell were manufactured in the same manner as Example 1 except that the volume of the battery cell was changed as shown in Table 1. Six samples of the same volume were prepared and evaluated, and these were expressed such as Examples 1-1, 1-2, 1-3, 1-4, 1-5 and 1-6.

### Evaluation Example 1: High-temperature Storage Characteristics

The battery cells according to the examples and the comparative examples were respectively constant current-charged to a voltage of 4.2 V at a current rate of 0.3 C at 25 °C and subsequently, cut off at a current rate of 0.05 C, while maintained at the 4.2 V in a constant voltage mode. Then, the cells were constant current-discharged to 2.5 V at a current rate of 0.2 C. After once more repeating the charge and discharge process, the cells were constant current-charged to a voltage of 4.2 V at a current rate of 0.3 C at 25 °C and then, cut off at a current of 0.05 C, while maintained at the 4.2 V in a constant voltage mode. The battery cells were stored at a high temperature of 60 °C for 60 days and then, measured with respect to a capacity retention rate (%), a resistance increase rate (%), and a gas internal pressure (MPa), and the results are shown in Table 1.

**(Table 1)**

| | | Cell volum e (cm³) | 60 °C storage capacity retention rate @ 60 days (%) | 60 °C storage resistance increase rate @ 60 days (%) | 60 °C storage gas internal pressure @ 60 days (MPa) |
|---|---|---|---|---|---|
| | 1-1 | | 84.5 | 61.7 | 0.68 |
| Ex. | 1-2 | 17 | 84.4 | 58.3 | 0.57 |
| | 1-3 | | 87.4 | 55.4 | 0.55 |
| | 1-4 | | 86.7 | 52.1 | 0.52 |
| | 1-5 | | 83.8 | 51.5 | 0.53 |
| | 1-6 | | 80.3 | 58.9 | 0.58 |
| | 2-1 | 24 | 80.7 | 58.4 | 0.57 |
| | 2-2 | | 85.9 | 53.7 | 0.48 |
| | 2-3 | | 87.3 | 49.5 | 0.45 |
| | 2-4 | | 88.3 | 52.4 | 0.47 |
| | 2-5 | | 86.4 | 51.0 | 0.45 |
| | 2-6 | | 81.7 | 55.1 | 0.50 |
| | 3-1 | 84 | 79.1 | 56.5 | 0.52 |
| | 3-2 | | 80.2 | 53.1 | 0.44 |
| | 3-3 | | 81.5 | 50.9 | 0.42 |
| | 3-4 | | 84.3 | 51.1 | 0.43 |
| | 3-5 | | 82.2 | 53.2 | 0.48 |
| | 3-6 | | 81.9 | 56.8 | 0.48 |
| | 4-1 | 133 | 77.4 | 60.1 | 0.50 |
| | 4-2 | | 79.5 | 59.1 | 0.45 |
| | 4-3 | | 79.1 | 58.9 | 0.44 |
| | 4-4 | | 80.6 | 58.5 | 0.47 |
| | 4-5 | | 79.6 | 58.1 | 0.45 |
| | 4-6 | | 78.0 | 61.4 | 0.47 |
| Comp. Ex. | 1-1 | 296 | 75.2 | 62.3 | 0.47 |
| | 1-2 | | 77.9 | 61.0 | 0.39 |
| | 1-3 | | 77.6 | 59.9 | 0.41 |
| | 1-4 | | 78.0 | 60.4 | 0.38 |
| | 1-5 | | 76.8 | 60.2 | 0.42 |
| | 1-6 | | 76.0 | 61.2 | 0.44 |

Referring to Table 1, the cells with a volume of 296 cm³ according to Comparative Examples 1-1 to 1-6 exhibited satisfactory gas internal pressure characteristics but deteriorated capacity retention of less than or equal to 78% and a resistance increase rate of greater than 60% when stored at a high temperature of 60 °C and thus greatly insufficient high-temperature storage characteristics. On the contrary, the cells with a volume of 17 to 133 cm³ according to the example embodiments exhibited an improved capacity retention rate and resistance increase rate during the storage at 60 °C and maintained satisfactory gas internal pressure characteristics and thereby, excellent high-temperature storage characteristics.

### Examples 5-1 to 8-4 and Comparative Examples 4-1 to 8-2

Battery cells were manufactured in the same manner as Example 1 except that the content of the 2-fluoro-4-methyl-1,3,2-dioxaphosphorane additive and the cell volume were designed as shown in Table 2.

### Evaluation Example 2: High-temperature Storage Characteristics

The cells according to the examples and the comparative examples were constant current-charged to a voltage of 4.2 V at a current rate of 0.3 C at 25 °C and subsequently, cut off at a current rate of 0.05 C, while maintained at the 4.2 V in a constant voltage mode. The cells were constant current-discharged to 2.5 V at a current rate of 0.2 C. After once more repeating the charge and discharge process, the cells were constant current-charged to a voltage of 4.2 V at a current rate of 0.3 C at 25 °C and subsequently, cut off at a current rate of 0.05 C while maintained at the 4.2 V in a constant voltage mode. The battery cells were stored at a high temperature of 60 °C for 60 days and then, measured with respect to a capacity retention rate (%), a resistance increase rate (%), and a gas internal pressure (MPa), and the results are shown in Table 2 below.

**(Table 2)**

| | | Cell volum e (cm³) | Content of additive (wt%) | 60 °C storage capacity retention rate @60 days (%) | 60 °C storage resistance increase rate @60 days (%) | 60 °C storage gas internal pressure @60 days (MPa) |
|---|---|---|---|---|---|---|
| Comp . Ex. | 4-1 | 1 | | 46.8 | 114.8 | 1.79 |
| | 4-2 | 17 | 0.0 | 47.3 | 98.4 | 1.72 |
| | 4-3 | 24 | | 45.2 | 91.8 | 1.63 |
| | 4-4 | 84 | | 48.3 | 90.5 | 1.59 |
| | 4-5 | 133 | | 47.3 | 87.0 | 1.62 |
| | 4-6 | 296 | | 48.1 | 94.5 | 1.67 |
| Comp . Ex. | 5-1 | 1 | 1.0 | 84.2 | 50.7 | 0.71 |
| Ex. | 5-1 | 17 | | 89.3 | 44.8 | 0.48 |
| | 5-2 | 24 | | 87.2 | 42.8 | 0.53 |
| | 5-3 | 84 | | 88.6 | 40.4 | 0.58 |
| | 5-4 | 133 | | 89.1 | 40.8 | 0.44 |
| Comp . Ex. | 5-2 | 296 | | 79.1 | 39.9 | 0.60 |
| Comp . Ex. | 6-1 | 1 | 4.0 | 70.5 | 66.0 | 0.54 |
| Ex. | 6-1 | 17 | | 74.9 | 55.1 | 0.42 |
| | 6-2 | 24 | | 76.9 | 51.6 | 0.39 |
| | 6-3 | 84 | | 73.3 | 54.9 | 0.43 |
| | 6-4 | 133 | | 78.0 | 59.2 | 0.40 |
| Comp . Ex. | 6-2 | 296 | | 70.1 | 65.5 | 0.45 |
| Comp . Ex. | 7-1 | 1 | 8.0 | 62.7 | 75.4 | 0.45 |
| Ex. | 7-1 | 17 | | 66.4 | 68.5 | 0.33 |
| | 7-2 | 24 | | 70.5 | 70.4 | 0.32 |
| | 7-3 | 84 | | 64.4 | 71.2 | 0.37 |
| | 7-4 | 133 | | 65.1 | 69.0 | 0.35 |
| Comp . Ex. | 7-2 | 296 | | 63.4 | 72.6 | 0.38 |
| Comp . Ex. | 8-1 | 1 | 12.0 | 52.0 | 87.4 | 0.42 |
| Ex. | 8-1 | 17 | | 49.9 | 80.3 | 0.31 |
| | 8-2 | 24 | | 51.0 | 79.5 | 0.33 |
| | 8-3 | 84 | | 50.4 | 77.7 | 0.35 |
| | 8-4 | 133 | | 48.7 | 82.1 | 0.34 |
| Comp . Ex. | 8-2 | 296 | | 49.1 | 85.2 | 0.38 |

Referring to Table 2, the cells using an electrolyte to which the additive was not added according to Comparative Examples 4-1 to 4-6 exhibited capacity retention of less than or equal to 48.3% after stored at 60 °C, a resistance increase rate of greater than or equal to 87%, and a gas internal pressure of greater than or equal to 1.59 MPa and thereby, greatly insufficient high-temperature storage characteristics. The cells with a volume of 1 cm³ according to Comparative Examples 5-1, 6-1, 7-1, and 8-1 exhibited a relatively high resistance increase rate and a relatively high gas internal pressure after stored at 60 °C and thereby, insufficient high-temperature storage characteristics. The cells with a volume of 296 cm³ according to Comparative Examples 5-2, 6-2, 7-2, and 8-2 exhibited a relatively low capacity retention rate and a relatively high resistance increase rate after stored at 60 °C and thereby, insufficient high-temperature storage characteristics.

On the contrary, the cells of Examples 5-1 to 5-4, 6-1 to 6-4, 7-1 to 7-4, and 8-1 to 8-4 exhibited all excellent high-temperature storage characteristics such as a capacity retention rate, a resistance increase rate, a gas internal pressure during the 60 °C storage, and the like. Accordingly, when the cell volume was adjusted to 5 cm³ to 200 cm³, while a certain amount of the additive of Chemical Formula 1 was added to the electrolyte according to one embodiment, the high-temperature storage characteristics turned out to be remarkably improved.

### <Description of Symbols>

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A rechargeable lithium battery (100), comprising
a positive electrode (114) including a positive active material;
a negative electrode (112) including a negative active material; and
an electrolyte including a non-aqueous organic solvent, a lithium salt, and an additive represented by Chemical Formula 1;
wherein a volume of the rechargeable lithium battery is 5 cm³ to 200 cm³: 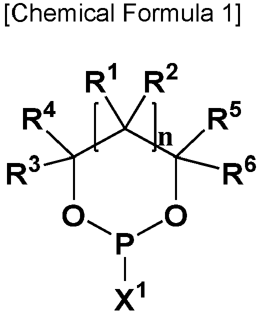
wherein, in Chemical Formula 1,
X¹ is a fluoro group, a chloro group, a bromo group, or an iodo group,
R¹ to R⁶ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1, wherein in the term "substituted or unsubstituted", "substituted" means that a hydrogen atom in a compound is replaced by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, C1 to C30 alkoxy group, C1 to C20 heteroalkyl group, C2 to C20 heteroaryl group, a C3 to C20 heteroarylalkyl group, a C3 to C30 cycloalkyl group, a C3 to C15 cycloalkenyl group, a C6 to C15 cycloalkynyl group, a C2 to C30 heterocycloalkyl group, and a combination thereof and
wherein the positive electrode (114) includes a current collector and a positive active material layer on the current collector,
the positive active material layer includes the positive active material and a carbon nanotube, and
the carbon nanotube is included in an amount of 0.5 wt% to 2.0 wt% based on the total weight of the positive active material layer.

2. The rechargeable lithium battery (100) of claim 1, wherein
Chemical Formula 1 is represented by Chemical Formula 1A or Chemical Formula 1B: 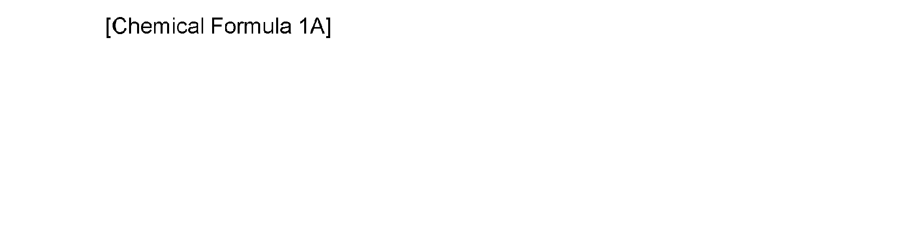 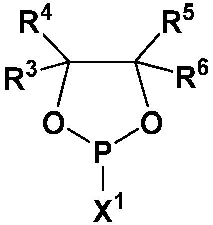 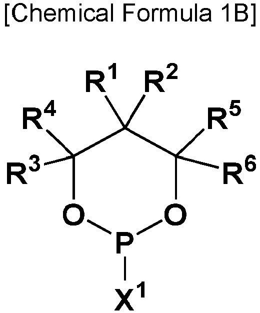
wherein, in Chemical Formula 1A and Chemical Formula 1B,
X¹ is a fluoro group, a chloro group, a bromo group, or an iodo group, and
R¹ to R⁶ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

3. The rechargeable lithium battery (100) of claim 2, wherein
in Chemical Formula 1A, R³ and R⁴ are each hydrogen and at least one of R⁶ and R⁶ is a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

4. The rechargeable lithium battery (100) of claim 1, wherein
the additive represented by Chemical Formula 1 is at least one of compounds of Group 1:

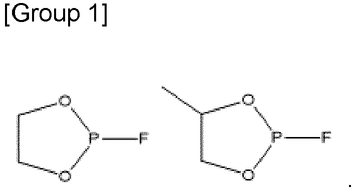

5. The rechargeable lithium battery (100) of any one of the proceeding claims, wherein
the additive represented by Chemical Formula 1 is included in an amount of 0.1 parts by weight to 10 parts by weight based on 100 parts by weight of a total electrolyte excluding the additive.

6. The rechargeable lithium battery (100) of any one of the proceeding claims, wherein
the electrolyte further includes other additives, and the other additives include vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propenesultone (PST), propanesultone (PS), lithiumtetrafluoroborate (LiBF₄), lithium difluorophosphate (LiPO₂F₂), 2-fluoro biphenyl (2-FBP), or a combination thereof.

7. The rechargeable lithium battery (100) of claim 6, wherein
the other additives are included in an amount of 0.2 parts by weight to 20 parts by weight based on 100 parts by weight of a total electrolyte excluding the additive and the other additives.

8. The rechargeable lithium battery (100) of any one of the proceeding claims, wherein
the positive active material includes at least one of lithium composite oxide represented by Chemical Formula 2:
[Chemical Formula 2] LiₐNiₓCo_{y}M¹_{z}M²ₜO₂
wherein, in Chemical Formula 2,0.9≤a<1.2, 0.8≤x<1.0, 0<y≤0.2, 0<z≤0.2, 0≤t≤0.1, x+y+z+t=1,
M¹ is Mn, Al, or a combination thereof, and
M² is B, Ba, Ca, Ce, Cr, Cu, F, Fe, Mg, Mo, Nb, P, S, Si, Sr, Ti, V, W, Zr, or a combination thereof.

9. The rechargeable lithium battery (100) of claim 8, wherein
in Chemical Formula 2, x is in the range of 0.90≤x<1.0.

10. The rechargeable lithium battery (100) of any one of the proceeding claims, wherein
the negative active material includes 70 wt% to 99 wt% of the carbon-based active material and 1 wt% to 30 wt% of silicon-based active material.

11. The rechargeable lithium battery (100) of claim 10, wherein
the carbon-based active material is crystalline carbon and the silicon-based active material is a silicon nanoparticle, a silicon-carbon composite, or combination thereof.

## Patentansprüche

1. Wiederaufladbare Lithiumbatterie (100), umfassend
eine positive Elektrode (114) mit einem positiven aktiven Material;
eine negative Elektrode (112) mit einem negativen aktiven Material; und
einen Elektrolyten mit einem nichtwässrigen organischen Lösungsmittel, einem Lithiumsalz und einem Additiv, das durch die chemische Formel 1 dargestellt ist;
wobei das Volumen der wiederaufladbaren Lithiumbatterie 5 cm³ bis 200 cm³ beträgt: 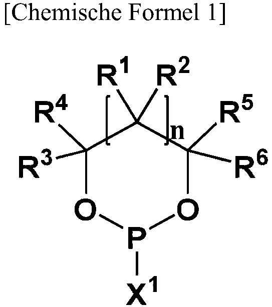
wobei in der chemischen Formel 1
X¹ eine Fluorgruppe, eine Chlorgruppe, eine Bromgruppe oder eine Iodgruppe ist,
R¹ bis R⁶ jeweils unabhängig voneinander Wasserstoff, eine Cyanogruppe, eine substituierte oder unsubstituierte Cl- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cycloalkylgruppe, eine substituierte oder unsubstituierte C6- bis C20-Arylgruppe oder eine substituierte oder unsubstituierte C2- bis C20-Heteroarylgruppe sind, und
n eine ganze Zahl von 0 oder 1 ist, wobei in dem Begriff "substituiert oder unsubstituiert" "substituiert" bedeutet, dass ein Wasserstoffatom in einer Verbindung durch einen Substituenten ersetzt ist, der aus einem Halogenatom (F, Br, Cl oder I), einer Hydroxygruppe, einer Alkoxygruppe, einer Nitrogruppe, einer Cyanogruppe, einer Aminogruppe, einer Azidogruppe, einer Amidino-Gruppe, einer Hydrazinogruppe, einer Hydrazonogruppe, einer Carbonylgruppe, einer Carbamylgruppe, einer Thiolgruppe, einer Estergruppe, einer Carboxylgruppe oder einem Salz davon, einer Sulfonsäuregruppe oder einem Salz davon, einer Phosphorsäuregruppe oder einem Salz davon, einer C1- bis C20-Alkylgruppe, einer C2- bis C20-Alkenylgruppe, einer C2- bis C20-Alkinylgruppe, einer C6- bis C30-Arylgruppe, einer C7- bis C30-Arylalkylgruppe, einer C1- bis C30-Alkoxygruppe, einer C1- bis C20-Heteroalkylgruppe, einer C2- bis C20-Heteroarylgruppe, einer C3- bis C20-Heteroarylalkylgruppe, einer C3- bis C30-Cycloalkylgruppe, einer C3- bis C15-Cycloalkenylgruppe, einer C6- bis C15-Cycloalkinylgruppe, einer C2- bis C30-Heterocycloalkylgruppe und einer Kombination davon ausgewählt ist, und
wobei die positive Elektrode (114) einen Stromkollektor und eine positive aktive Materialschicht auf dem Stromkollektor umfasst,
die positive aktive Materialschicht das positive aktive Material und ein Kohlenstoffnanoröhrchen umfasst, und
das Kohlenstoffnanoröhrchen in einer Menge von 0,5 Gew.-% bis 2,0 Gew.-%, bezogen auf das Gesamtgewicht der positiven aktiven Materialschicht, enthalten ist.

2. Wiederaufladbare Lithiumbatterie (100) nach Anspruch 1, wobei
die chemische Formel 1 durch die chemische Formel 1A oder die chemische Formel 1B dargestellt ist: 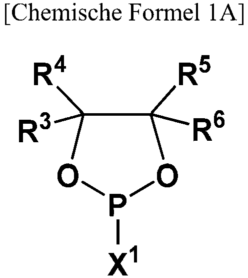 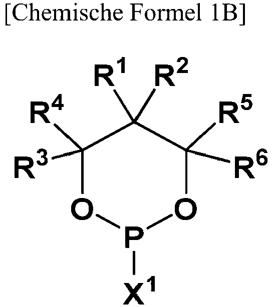
wobei in der chemischen Formel 1A und der chemischen Formel 1B
X¹ eine Fluorgruppe, eine Chlorgruppe, eine Bromgruppe oder eine Iodgruppe ist und
R¹ bis R⁶ jeweils unabhängig voneinander Wasserstoff, eine substituierte oder unsubstituierte C1- bis C10-Alkylgruppe, eine substituierte oder unsubstituierte C1- bis C10-
Alkoxygruppe, eine substituierte oder unsubstituierte C2- bis C10-Alkenylgruppe oder eine substituierte oder unsubstituierte C2- bis C10-Alkinylgruppe sind.

3. Wiederaufladbare Lithiumbatterie (100) nach Anspruch 2, wobei
in der chemischen Formel 1A R³ und R⁴ jeweils Wasserstoff sind und mindestens eines von R⁵ und R⁶ eine substituierte oder unsubstituierte C1- bis C10-Alkylgruppe, eine substituierte oder unsubstituierte C1- bis C10-Alkoxygruppe, eine substituierte oder unsubstituierte C2- bis C10-Alkenylgruppe oder eine substituierte oder unsubstituierte C2- bis C10-Alkinylgruppe ist.

4. Wiederaufladbare Lithiumbatterie (100) nach Anspruch 1, wobei
das durch die chemische Formel 1 dargestellte Additiv mindestens eine der Verbindungen der Gruppe 1 ist:

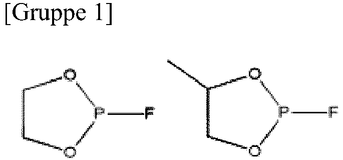

5. Wiederaufladbare Lithiumbatterie (100) nach einem der vorstehenden Ansprüche, wobei
das durch die chemische Formel 1 dargestellte Additiv in einer Menge von 0,1 Gewichtsteilen bis 10 Gewichtsteilen, bezogen auf 100 Gewichtsteile des gesamten Elektrolyten ohne das Additiv, enthalten ist.

6. Wiederaufladbare Lithiumbatterie (100) nach einem der vorstehenden Ansprüche, wobei
der Elektrolyt ferner weitere Additive enthält und die weiteren Additive Vinylencarbonat (VC), Fluorethylencarbonat (FEC), Difluorethylencarbonat (DFEC), Chlorethylencarbonat (CEC), Dichlorethylencarbonat (DCEC), Bromethylencarbonat (BEC), Dibromethylencarbonat (DBEC), Nitroethylencarbonat, Cyanoethylencarbonat, Vinylethylencarbonat (VEC), Succinonitril (SN), Adiponitril (AN), 1,3,6-Hexantricyanid (HTCN), Propensulton (PST), Propansulton (PS), Lithiumtetrafluorborat (LiBF₄), Lithiumdifluorophosphat (LiPO₂F₂), 2-Fluorbiphenyl (2-FBP) oder eine Kombination davon umfassen.

7. Wiederaufladbare Lithiumbatterie (100) nach Anspruch 6, wobei
die weiteren Additive in einer Menge von 0,2 Gewichtsteilen bis 20 Gewichtsteilen, bezogen auf 100 Gewichtsteile des gesamten Elektrolyten ohne das Additiv und die weiteren Additive, enthalten sind.

8. Wiederaufladbare Lithiumbatterie (100) nach einem der vorstehenden Ansprüche, wobei
das positive aktive Material mindestens ein durch die chemische Formel 2 dargestelltes Lithium-Verbundoxid enthält:
[Chemische Formel 2] LiₐNiₓCo_{y}M¹_{z}M²ₜO₂
wobei in der chemischen Formel 2 0,9 ≤ a < 1,2, 0,8 ≤ x < 1,0, 0 < y ≤ 0,2, 0 < z ≤ 0,2, 0 ≤ t ≤ 0,1, x + y + z + t = 1,
M¹ Mn, Al oder eine Kombination davon ist und
M² B, Ba, Ca, Ce, Cr, Cu, F, Fe, Mg, Mo, Nb, P, S, Si, Sr, Ti, V, W, Zr oder eine Kombination davon ist.

9. Wiederaufladbare Lithiumbatterie (100) nach Anspruch 8, wobei
in der chemischen Formel 2 x im Bereich von 0,90 ≤ x < 1,0 liegt.

10. Wiederaufladbare Lithiumbatterie (100) nach einem der vorstehenden Ansprüche, wobei
das negative aktive Material 70 Gew.-% bis 99 Gew.-% des aktiven Materials auf Kohlenstoffbasis und 1 Gew.-% bis 30 Gew.-% des aktiven Materials auf Siliziumbasis umfasst.

11. Wiederaufladbare Lithiumbatterie (100) nach Anspruch 10, wobei
das aktive Material auf Kohlenstoffbasis kristalliner Kohlenstoff und das aktive Material auf Siliziumbasis ein Silizium-Nanopartikel, ein Silizium-Kohlenstoff-Verbundstoff oder eine Kombination davon ist.

## Revendications

1. Batterie rechargeable au lithium (100), comportant :
une électrode positive (114) incluant un matériau actif positif ;
une électrode négative (112) incluant un matériau actif négatif ; et
un électrolyte incluant un solvant organique non aqueux, un sel de lithium et un additif représenté par la Formule chimique 1 ;
dans laquelle un volume de la batterie rechargeable au lithium est de 5 cm³ à 200 cm³ : 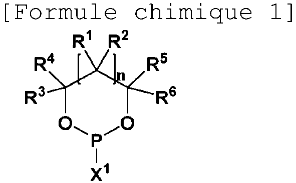
dans laquelle, dans la Formule chimique 1,
X¹ est un groupe fluoro, un groupe chloro, un groupe bromo, ou un groupe iodo,
R¹ à R⁶ sont chacun indépendamment hydrogène, un groupe cyano, un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe cycloalkyle en C3 à C20 substitué ou non substitué, un groupe aryle en C6 à C20 substitué ou non substitué ou un groupe hétéroaryle en C2 à C20 substitué ou non substitué, et
n est un nombre entier de 0 ou 1, dans laquelle dans le terme « substitué ou non substitué », « substitué », signifie qu'un atome d'hydrogène dans un composé est remplacé par un substituant sélectionné parmi un atome d'halogène (F, Br, Cl ou 1), un groupe hydroxy, un groupe alcoxy, un groupe nitro, un groupe cyano, un groupe amino, un groupe azido, un groupe amidino, un groupe hydrazino, un groupe hydrazono, un groupe carbonyle, un groupe carbamyle, un groupe thiol, un groupe ester, un groupe carboxyle ou un sel de celui-ci, un groupe acide sulfonique ou un sel de celui-ci, un groupe acide phosphorique ou un sel de celui-ci, un groupe alkyle en C1 à C20, un groupe alcényle en C2 à C20, un groupe alcynyle en C2 à C20, un groupe aryle en C6 à C30, un groupe arylalkyle en C7 à C30, un groupe alcoxy en C1 à C30, un groupe hétéroalkyle en C1 à C20, un groupe hétéroaryle en C2 à C20, un groupe hétéroarylalkyle en C3 à C20, un groupe cycloalkyle en C3 à C30, un groupe cycloalkényle en C3 à C15, un groupe cycloalkynyle en C6 à C15, un groupe hétérocycloalkyle en C2 à C30 et une combinaison de ceux-ci et
dans laquelle l'électrode positive (114) inclut un collecteur de courant et une couche de matériau actif positif sur le collecteur de courant,
la couche de matériau actif positif inclut le matériau actif positif et un nanotube de carbone, et
le nanotube de carbone est inclus en une quantité de 0,5 % en poids à 2,0 % en poids sur la base du poids total de la couche de matériau actif positif.

2. Batterie rechargeable au lithium (100) selon la revendication 1, dans laquelle
la Formule chimique 1 est représentée par la Formule chimique 1A ou la Formule chimique 1B : 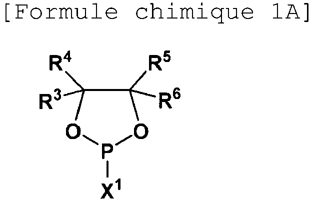 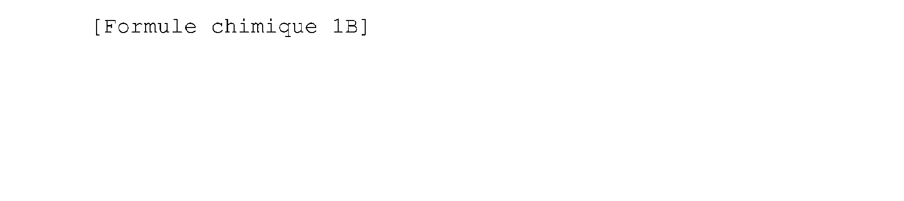 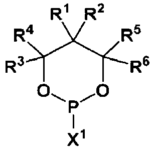
dans laquelle, dans la Formule chimique 1A et la Formule chimique 1B,
X¹ est un groupe fluoro, un groupe chloro, un groupe bromo, ou un groupe iodo, et
R¹ à R⁶ sont chacun indépendamment hydrogène, un groupe alkyle en C1 à C10 substitué ou non substitué, un groupe alcoxy en C1 à C10 substitué ou non substitué, un groupe alcényle en C2 à C10 substitué ou non substitué, ou un groupe alcynyle en C2 à C10 substitué ou non substitué.

3. Batterie rechargeable au lithium (100) selon la revendication 2, dans laquelle
dans la Formule chimique 1A, R³ et R⁴ sont chacun hydrogène et au moins un parmi R⁵ et R⁶ est un groupe alkyle en C1 à C10 substitué ou non substitué, un groupe alcoxy en C1 à C10 substitué ou non substitué, un groupe alcényle en C2 à C10 substitué ou non substitué, ou un groupe alcynyle en C2 à C10 substitué ou non substitué.

4. Batterie rechargeable au lithium (100) selon la revendication 1, dans laquelle
l'additif représenté par la Formule chimique 1 est au moins l'un des composés du groupe 1 :

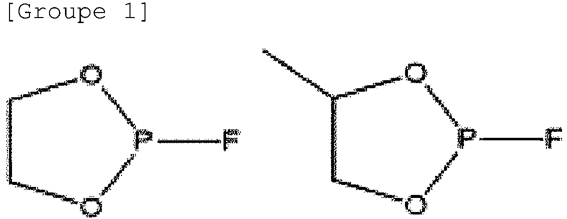

5. Batterie rechargeable au lithium (100) selon l'une quelconque des revendications précédentes, dans laquelle
l'additif représenté par la Formule chimique 1 est inclus en une quantité de 0,1 partie en poids à 10 parties en poids sur la base de 100 parties en poids d'un électrolyte total excluant l'additif.

6. Batterie rechargeable au lithium (100) selon l'une quelconque des revendications précédentes, dans laquelle
l'électrolyte inclut en outre d'autres additifs, et les autres additifs incluent du carbonate de vinylène (VC), carbonate de fluoroéthylène (FEC), carbonate de difluoroéthylène (DFEC), carbonate de chloroéthylène (CEC), carbonate de dichloroéthylène (DCEC), carbonate de bromoéthylène (BEC), carbonate de dibromoéthylène (DBEC), carbonate de nitroéthylène, carbonate de cyanoéthylène, carbonate de vinyléthylène (VEC), succinonitrile (SN), adiponitrile (AN), 1,3,6-hexane tricyanure (HTCN), propènesultone (PST), propanesultone (PS), tétrafluoroborate de lithium (LiBF₄), difluorophosphate de lithium (LiPO₂F₂), 2-fluorobiphényle (2-FBP) ou une combinaison de ceux-ci.

7. Batterie rechargeable au lithium (100) selon la revendication 6, dans laquelle
les autres additifs sont inclus en une quantité de 0,2 partie en poids à 20 parties en poids sur la base de 100 parties en poids d'un électrolyte total excluant l'additif et les autres additifs.

8. Batterie rechargeable au lithium (100) selon l'une quelconque des revendications précédentes, dans laquelle
le matériau actif positif inclut au moins l'un des oxydes composites de lithium représentés par la Formule chimique 2 :
[Formule chimique 2] LiₐNiₓCO_{y}M¹_{z}M²ₜO₂
dans laquelle, dans la Formule chimique 2, 0,9 ≤ a < 1,2, 0,8 ≤ x < 1,0, 0 < y ≤ 0,2, 0 < z ≤ 0,2, 0 ≤ t ≤ 0, 1, x + y + z + t = 1,
M¹ est Mn, Al ou une combinaison de ceux-ci, et
M² est B, Ba, Ca, Ce, Cr, Cu, F, Fe, Mg, Mo, Nb, P, S, Si, Sr, Ti, V, W, Zr ou une combinaison de ceux-ci.

9. Batterie rechargeable au lithium (100) selon la revendication 8, dans laquelle, dans la Formule chimique 2, x est dans la plage de 0,90 ≤ x < 1,0.

10. Batterie rechargeable au lithium (100) selon l'une quelconque des revendications précédentes, dans laquelle
le matériau actif négatif inclut 70 % en poids à 99 % en poids du matériau actif à base de carbone et 1 % en poids à 30 % en poids du matériau actif à base de silicium.

11. Batterie rechargeable au lithium (100) selon la revendication 10, dans laquelle
le matériau actif à base de carbone est du carbone cristallin et le matériau actif à base de silicium est une nanoparticule de silicium, un composite silicium-carbone ou une combinaison de ceux-ci.
